Europäisches Patentamt

European Patent Office

Office européen des brevets

(19)

(11) Veröffentlichungsnummer : **0 310 594 B1**

(12) **EUROPÄISCHE PATENTSCHRIFT**

(45) Veröffentlichungstag der Patentschrift :
**22.07.92 Patentblatt 92/30**

(51) Int. Cl.$^5$ : **B30B 11/02**

(21) Anmeldenummer : **88890251.7**

(22) Anmeldetag : **29.09.88**

(54) **Verfahren zum Beschicken einer Presse zur Herstellung von Reibbelägen.**

(30) Priorität : **29.09.87 AT 2478/87**

(43) Veröffentlichungstag der Anmeldung :
**05.04.89 Patentblatt 89/14**

(45) Bekanntmachung des Hinweises auf die
Patenterteilung :
**22.07.92 Patentblatt 92/30**

(84) Benannte Vertragsstaaten :
**BE DE ES FR IT**

(56) Entgegenhaltungen :
**DE-A- 1 942 175**
**DE-A- 3 419 057**
**DE-A- 3 430 599**
**DE-C- 826 721**
**FR-A- 2 168 678**
**US-A- 4 472 350**

(73) Patentinhaber : **Leinweber Maschinen**
**Gesellschaft m.b.H. & Co. KG.**
**Johann-Giefing-Strasse 8-10**
**A-2700 Wiener Neustadt (AT)**

(72) Erfinder : **Leinweber, Johann**
**Johann-Giefing-Strasse 8-10**
**A-2700 Wiener Neustadt (AT)**

(74) Vertreter : **Müllner, Erwin, Dr. et al**
**Patentanwälte Dr. Erwin Müllner Dipl.-Ing.**
**Werner Katschinka Postfach 159**
**Weihburggasse 9**
**A-1010 Wien (AT)**

## Beschreibung

Die Erfindung betrifft ein Verfahren zum Beschicken einer Presse zur Herstellung von Reibbelägen und eine Presse zur Durchführung dieses Verfahrens.

Unter Reibbelägen sollen in diesem Zusammenhang insbesondere Brems- und Kupplungsbeläge verstanden werden. Solche Beläge werden in Pressen, zumeist in Heißpressen hergestellt. Bremsbeläge bestehen üblicherweise aus drei Teilen: dem Reibbelag, der Zwischenschicht und der Rückenplatte. Zumeist werden solche Bremsbeläge in einem einzigen Preßvorgang hergestellt. Daneben werden aber auch Bremsbeläge produziert, die nur aus Reibbelag und Rückenplatte bestehen, wo also keine Zwischenschicht notwendig ist. Zum Teil werden die Bremsbeläge auch ohne Rückenplatten gepreßt und erst nach dem Preßvorgang auf einer Rückenplatte befestigt. Zur Herstellung eines Reibbelags füllt man die Preßform der Presse mit Reibbelagpulver, unter Umständen gibt man darüber Zwischenschichtpulver und gegebenenfalls legt man auf die Preßform eine Rückenplatte auf. Danach kann das Pressen beginnen, wobei im allgemeinen Preß- und Belüftungszyklen abwechseln, um den entstehenden Gasen ein Entweichen zu ermöglichen. Nachdem der Reibbelag ausgehärtet ist, wird die Presse geöffnet und der fertige Reibbelag entnommen.

Es ist üblich, mehrere Pressen zu Preßanlagen zu kombinieren. Preßanlagen werden oft als Rundtischmaschinen ausgebildet. Eine gewisse Anzahl von Heißpressen (meist 6, 12, 18 oder 24) sind am Umfang des Rundtisches befestigt. Der Rundtisch wird taktweise weitergedreht, sodaß die Heißpressen an ortsfesten Manipulationsstationen vorbeigeführt werden. Bei der ersten Manipulationsstation werden die fertigen Beläge aus den Heißpressen entnommen; anschließend kann die Heißpresse gereinigt und dann mit Trennmittel besprüht werden. Bei der zweiten Manipulationsstation werden die Formen mit der Reibbelagmasse befüllt und anschließend wird die Rückenplatte aufgelegt. Danach schließt die Heißpresse und der Härteprozeß beginnt. Während des Härteprozesses läuft die Heißpresse einmal im Kreis und gelangt dann wieder zur ersten Manipulationsstation, wo der fertige Bremsbelag entnommen wird und ein neuer Zyklus beginnt. Eine derartige Preßanlage ist in einem Prospekt des Anmelders bzw. Patentinhabers beschrieben; dieser Prospekt wurde ab 1985 verteilt.

Es sind bereits verschiedene Möglichkeiten, die Presse zu beschicken, bekannt. Man kann die Presse direkt mit den pulverförmigen Materialien beschicken; dies ist nachteilig, weil die Presse von oben nur schlecht zugänglich ist und weil es schwierig ist, eine gleichmäßige Dicke des Zwischenschichtpulvers auf dem Reibbelagpulver auszubilden.

Unter Pulver wird in diesem Zusammenhang jedes Ausgangsmaterial verstanden, das zu Reibbelägen gepreßt werden kann, insbesondere sollen also auch faserige Materialien und Granulate unter diesen Begriff fallen.

Zur Behebung dieses Nachteils ist es bekannt (s. DE-A1-34 19 057, S.4), das Zwischenschichtpulver kalt mit hoher Preßkraft auf die Rückenplatte aufzupressen und die Presse nur mit Reibbelagpulver zu beschicken. Die Rückenplatte samt aufgepreßter Zwischenschicht wird dann auf die Preßform gelegt und anschließend wird der Preßvorgang eingeleitet. Dies funktioniert jedoch nicht bei allen Materialien: es kann sein, daß die Zwischenschicht nicht auf der Rückenplatte hält; aber selbst wenn sie hält, kann es passieren, daß der Reibbelag während des Pressens keine genügend feste Verbindung mit der Zwischenschicht eingeht, weil diese bereits vor dem Pressen zu stark verdichtet war. Bei derartigen Materialien muß - will man die Presse mit Reibbelagpulver beschicken - dieses geglättet werden und anschließend Zwischenschichtpulver in die Presse gefüllt und danach dieses geglättet werden. Darauf wird die Rückenplatte aufgelegt und der Preßvorgang kann beginnen. All diese Manipulationen kosten natürlich Zeit, sodaß die Ausnützung der Pressen nicht optimal ist.

Es sind anderseits auch Heißpressen mit vielen Preßformen bekannt (s. DE-A1 2 229 537, S.1-2). Bei diesen Pressen werden also stets viele Reibbeläge gleichzeitig gepreßt, wobei aber eine individuelle Regelung der Preßkraft nicht möglich ist. Diese Heißpressen werden üblicherweise mit kalt vorgepreßten Preßlingen beschickt, um die für das Beschicken notwendige Zeit zu verringern. Dieses Verfahren ist aber bei asbestfreien Reibbelägen, die heute hauptsächlich produziert werden, jedoch nicht anwendbar, weil die produzierten Reibbeläge nicht genügend stabil sind; das Problem ist also ähnlich wie bei dem Verfahren, wo die Zwischenschicht kalt auf die Rückenplatte aufgepreßt wird.

Die eingesetzten Pulver haben stark unterschiedliche Verdichtungsverhältnisse. Unter Verdichtungsverhältnis wird hier das Verhältnis vom Volumen des fertig gepreßten Belags zum Volumen des Pulvers vor dem Pressen verstanden. Es gibt heute Materialien mit einem Verdichtungsverhältnis bis 1:10. Für solche Materialien muß die Preßform, wenn sie mit Reibbelagpulver beschickt wird, sehr hoch sein. Wird die Presse jedoch mit kalt vorgepreßten Preßlingen beschickt, so kann die Höhe der Preßform natürlich wesentlich geringer sein. Die Höhe der Preßform wirkt sich deutlich auf die Herstellungskosten der Reibbeläge aus: einerseits ist die Preßform selbst billiger, anderseits können Pressen mit geringerem Hub eingesetzt werden; schließlich sind auch die Energiekosten niedriger, da die Preßform im allgemeinen beheizt wird. Kalt vorgepreßte Preßlinge

2

können aber, wie oben erwähnt, nicht immer eingesetzt werden.

Es ist Aufgabe der vorliegenden Erfindung, ein Verfahren zum Beschicken einer Presse zu schaffen, das für alle Arten von Reibbelag- und Zwischenschichtpulver anwendbar ist, bei dem die Presse zum Beschicken nur kurze Zeit benötigt wird und welches es ermöglicht, Pressen mit Preßformen relativ geringer Höhe einzusetzen. Das Beschicken soll ermöglichen, daß Reibbeläge hoher Qualität durch die Presse produziert werden; es soll sich insbesondere auch für Preßanlagen, z.B. Rundtischmaschinen, eignen.

Die Aufgaben werden bei einem Verfahren zur Beschicken einer Presse zur Herstellung von Blöcken aus schüttbarer Masse, bei dem die Masse, bei dem die Masse in eine Zwischenform, deren Innenkontur an die Innenkontur der Preßform angepaßt ist, gefüllt wird, die Masse in der Zwischenform verdichtet wird, danach die Zwischenform zur Presse transportiert und auf die Preßform gesetzt wird, sodaß deren Innenkonturen übereinanderliegen, während der Preßstempel der Presse in einer oberen Stellung ist, erfindungsgemäß dadurch gelöst, daß zur Herstellung von Bremsbelägen als Masse Reibbelagpulver und Zwischenschichtpulver verwendet wird, wobei zuerst das Reibbelagpulver in die Zwischenform gefüllt und anschließend verdichtet wird und danach das Zwischenschichtpulver gleichmäßig in die Zwischenform gefüllt wird, wonach gegebenenfalls noch einmal verdichtet wird, und daß während des Absenkens des Preßstempels ein Ausstoßstempel von oben auf die Masse in der Zwischenform drückt, wobei der Ausstoßstempel synchron mit dem Preßstempel abgesenkt wird, bis die gesamte in der Zwischenform befindliche Masse in die Preßform gelangt ist.

Das Reibbelagpulver wird also nicht direkt in die Preßform gefüllt, sondern in eine Zwischenform. Diese Zwischenform wird gleichmäßig befüllt und das Pulver wird verdichtet. Z.B. kann ein Reibbelag mit einem Verdichtungsverhältnis von 1:10 mit einer Kraft von 2000 N auf etwa 1/3 Volumen verdichtet werden, sodaß das Verdichtungsverhältnis in der Presse nur noch etwa 1:3 beträgt. Beim erfindungsgemäßen Verdichten werden geringere Kräfte angewendet als beim oben beschriebenen Kalt-Vorpressen; dies ist möglich, weil es ja nicht notwendig ist, einen stabilen Vorpreßling zu schaffen, der in die Presse eingelegt wird. Das Reibbelagpulver befindet sich vorerst in der Zwischenform, in der es ohne Beschädigung zur Presse transportiert werden kann. Während der Stempel der Presse in einer oberen Stellung ist, also die Preßform annähernd vollständig ausfüllt, wird die Zwischenform auf die Preßform gesetzt, sodaß deren innere Konturen übereinander liegen. Nun wird von oben mit einem Ausstoßstempel auf das Pulver in der Zwischenform gedrückt, und der Preßstempel synchron mit dem Ausstoßstempel abgesenkt. Diese Absenkbewegung des Preßstempels und des Ausstoßstempels wird gestoppt, sobald das gesamte in der Zwischenform befindliche Pulver in die Preßform gelangt ist. Durch die synchrone Absenkbewegung wird das Pulver sehr schonend abgesenkt, sodaß die Preßform rasch und sehr gleichmäßig gefüllt wird. Insbesondere ist eine konstante Dicke der Zwischenschicht gewährleistet.

Durch das erfindungsgemäße Verfahren ist es möglich, die Stärke des Verdichtens völlig frei zu wählen. Es ist dabei bei jedem Reibbelagpulver der richtige Kompromiß möglich: je höher verdichtet wird, umso geringer kann die Höhe der Preßform sein (wodurch die Kosten für die Presse sinken), anderseits muß auf die Festigkeit der Verbindung der einzelnen Schichten in den fertigen Produkten Rücksicht genommen werden.

Es ist zweckmäßig, daß eine Zwischenform mit verschließbarem Boden verwendet wird und daß der Boden vor dem Füllen geschlossen und nach dem Aufsetzen der Zwischenform auf die Preßform geöffnet wird. Es gibt Beläge, die auch nach dem Verdichten nicht ausreichend stabil sind, um in einer Zwischenform ohne Boden mit Sicherheit transportiert werden zu können. Als verschließbarer Boden wird in diesem Fall am einfachsten eine ausschiebbare Bodenplatte verwendet.

Ein weiteres Erfindungsmerkmal ist dadurch gekennzeichnet, daß eine Zwischenform bestehend aus zwei übereinanderliegenden Teilen mit gleicher Innenkontur verwendet wird, deren Gesamthöhe zur Aufnahme des Reibbelagpulvers ausreicht, wobei die Höhe des unteren Teils zur Aufnahme des verdichteten Reibbelag- und Zwischenschichtpulvers ausreicht, und daß nach dem Verdichten nur der untere Teil der Zwischenform zur Presse transportiert wird.

Auf diese Weise wird über der Preßform in der Presse nur der unbedingt erforderliche Platz benötigt, weil die Höhe des Teils der Zwischenform, der in die Presse gebracht wird, praktisch vollständig mit verdichtetem Material gefüllt ist. Bei Verwendung einer einteiligen Zwischenform wird hingegen auch für den oberen leeren Bereich der Zwischenform Platz in der Presse benötigt.

Eine Presse, die zur Durchführung dieses Verfahrens besonders geeignet ist, weist einen durch einen Preßzylinder mit Preßkolben betätigbaren Preßstempel, eine Preßform und eine ausfahrbare, durch einen Gegendruckzylinder mit Gegendruckkolben beaufschlagbare Gegendruckplatte auf und ist erfindungsgemäß dadurch gekennzeichnet, daß der Gegendruckzylinder über der Preßform liegt und daß über dem Gegendruckzylinder eine Betätigungsvorrichtung, z.B. ein Pneumatikzylinder, für einen Ausstoßstempel liegt, der mit dem an der Unterseite des Gegendruckkolbens versenkbar angeordneten Ausstoßstempel verbunden ist.

Diese Presse hat also einen hydraulisch oder pneumatischhydraulisch betätigten Preßstempel, der in einer Preßform verschiebbar ist. Damit während des Pressens das Material nicht durch den Preßstempel aus der Preßform gedrückt wird, ist eine Gegendruckplatte erforderlich, die mit einer Kraft auf die Preßform gepreßt werden muß, die größer ist als die Kraft des Preßstempels. Zusätzlich zu diesen bekannten Elementen ist ein Ausstoßstempel vorgesehen, der zum Ausstoßen des Reibbelagpulvers aus der Zwischenform dient. Er ist an der Unterseite des Gegendruckkolbens versenkbar angeordnet, sodaß er während des Preßvorgangs das Andrücken der Gegendruckplatte durch den Gegendruckkolben nicht behindert. Seine Betätigungsvorrichtung, z.B. ein Pneumatikzylinder, liegt über dem Gegendruckzylinder.

Um die Presse zu beschicken, wird die Gegendruckplatte ausgefahren, sodaß Platz für die Zwischenform geschaffen wird. Gleichzeitig wird ermöglicht, daß der Ausstoßstempel aus seiner versenkten Stellung ausgefahren werden und auf das Reibbelagpulver bzw. das Zwischenschichtpulver in der Zwischenform drücken kann.

Eine einfache Verbindung zwischen dem Ausstoßstempel und seiner Betätigungsvorrichtung kann dadurch realisiert werden, daß der Gegendruckkolben eine Bohrung aufweist, durch die eine Verbindungsstange zwischen dem Ausstoßstempel und seiner Betätigungsvorrichtung geführt ist, und daß in der Bohrung eine Feder untergebracht ist, durch die die Verbindungsstange in eine Richtung vorgespannt ist.

Auf diese Art wird erreicht, daß die Betätigungsvorrichtung nur in einer Richtung Kraft aufbringen muß, weil die Rückstellbewegung durch die Feder bewirkt wird. Anderseits ergibt sich bei Rundtischmaschinen die Möglichkeit, daß zwar jede Presse eine eigene Verbindungsstange aufweist, aber für die gesamte Rundtischmaschine nur eine einzige ortsfeste Betätigungsvorrichtung vorgesehen ist, die in beiden Richtungen beaufschlagbar ist. Es muß der Ausstoßstempel ja nur während des Beschickens, also bei der Manipulationsstation, betätigt werden. Während des Preßvorganges genügt es, daß er durch die Feder in der oberen Stellung gehalten wird.

Eine weitere Ausführungsform der Presse ist dadurch gekennzeichnet, daß die Gegendruckplatte um eine Standsäule ausschwenkbar ist. In diesem Fall ist es zweckmäßig, daß die Gegendruckplatte Elektromagnete zur Aufnahme einer Rückenplatte aufweist.

Auf diese Art und Weise kann die Gegendruckplatte eine zusätzliche Funktion (zusätzlich zur Freigabe des Raums für die Zwischenform und Freigabe des Weges für den Ausstoßstempel) ausüben: sie kann die Presse mit einer Rückenplatte beschicken. In der ausgeschwenkten Position wird unter sie eine Rückenplatte gelegt und die Elektromagnete werden eingeschaltet. Beim Einschwenken und anschließenden Andrücken auf die Preßform wird automatisch die Rückenplatte aufgelegt. Nach dem Preßvorgang kann der fertige Reibbelag durch die Gegendruckplatte magnetisch aus der Presse entnommen werden. Da die Gegendruckplatte üblicherweise geheizt ist, wird die Rückenplatte dadurch vor dem Pressen vorgeheizt, wodurch die Qualität der Fertigprodukte gesteigert bzw. die Aushärtezeit verkürzt werden kann.

Alternativ dazu könnten natürlich andere Greifer, z.B. Vakuumsauger, verwendet werden. Elektromagnete scheinen aber für ferromagnetische Rückenplatten die einfachste Ausführungsform zu sein.

Es ist zweckmäßig, wenn unter der Gegendruckplatte im ausgeschwenkten Zustand ein Magazin für Rückenplatten angeordnet ist. Auf diese Art können die Rückenplatten direkt aus dem Magazin durch die Gegendruckplatte entnommen und auf die Preßform aufgelegt werden.

Es ist vorteilhaft, wenn das Magazin mehrere Stapeln unterschiedlicher Rückenplatten enthält. Durch solch ein Magazin wird es möglich, bei Rundtischmaschinen unterschiedliche Pressen für unterschiedliche Reibbeläge einzusetzen. Das Magazin für die Rückenplatten ist ortsfest. Die Pressen des Rundtisches werden Schritt um Schritt weiterbewegt und kommen nacheinander an dem Magazin für die Rückenplatten vorbei. Je nach der Presse, die sich gerade beim Magazin für die Rückenplatten befindet, kann die passende Rückenplatte abgegeben werden.

Anhand der beiliegenden Zeichnungen wird ein Ausführungsbeispiel einer erfindungsgemäßen Presse näher erläutert.

Es zeigt:

Fig. 1 eine erfindungsgemäße Presse in der Stellung zum Beschicken, also mit ausgeschwenkter Gegendruckplatte;

Fig. 2 dieselbe Presse mit eingeschwenkter Gegendruckplatte;

und Fig. 3 dieselbe Presse während des Pressens, also mit angedrückter Gegendruckplatte.

Die in den Figuren dargestellte Presse weist als Preßzylinder 1 einen herkömmlichen Hydraulikzylinder auf. Dieser Hydraulikzylinder kann - je nach zu fertigenden Reibbelägen - eine maximale Preßkraft von 300, 650 oder 1000 kN aufweisen. Wenn nicht allzu hohe Kräfte benötigt werden, kann an Stelle eines Hydraulikzylinders auch ein Pneumatikzylinder mit pneumohydraulischem Krafthub verwendet werden. In diesem Preßzylinder 1 befindet sich ein Preßkolben (nicht dargestellt), der über ein Zwischenstück 2, eine Kupplungsplatte 3 und einen Zwischenstempel 4 mit Isolierung mit einem beheizten Preßstempel 5 verbunden ist. Der Preßstempel 5 befindet sich in einer Preßform 6, die von einer Formheizung 7 umgeben ist. Die Preßform 6 ist auf einem Flansch 8 mit Isolierung angebracht.

Über der Preßform 6 befindet sich ein Gegendruckzylinder 9 mit Gegendruckkolben 10. Auf der Unterseite des Gegendruckkolbens 10 befindet sich in einer Vertiefung der Ausstoßstempel 11. Durch eine zentrische Bohrung 14 im Gegendruckkolben 10 geht eine Verbindungsstange 12, die durch eine Feder 13 nach oben vorgespannt ist. Die Verbindungsstange 12 ist unten mit dem Ausstoßstempel 11 und oben mit einer Betätigungsvorrichtung 15 verbunden. Die Verbindung mit der Betätigungsvorrichtung 15 ist dabei nicht fest, wie durch den Spalt 15′ angedeutet, sondern nur durch zwei aneinanderliegende Stangen realisiert. (Eine Zugkraft braucht wegen der Feder 13 nicht übertragen zu werden.) Durch diese Ausführungsform kann die Presse ohne weitere Maßnahme von der Betätigungsvorrichtung getrennt werden, was bei Rundtischmaschinen wichtig ist.

Zwischen der Preßform 6 und dem Ausstoßstempel 11 befindet sich eine beheizte Gegendruckplatte 16 mit Elektromagneten (nicht dargestellt). Die Gegendruckplatte 16 ist in einem Träger 17 vertikal verschiebbar gelagert und mittels Federn (nicht dargestellt) nach oben vorgespannt. Dieser Träger 17 ist an einer Standsäule 18 drehbar gelagert.

Der Ausstoßstempel 11 darf nicht allzu heiß werden, weil sonst die Gefahr besteht, daß Pulver an ihm kleben bleibt. Um die thermische Leitfähigkeit gering zu halten, liegt bei einer konkret verwirklichten Presse die beheizte Gegendruckplatte 16 auf dem Träger 17 nur an drei Punkten auf; der Gegendruckkolben 10 drückt nur an vier Punkten auf die Gegendruckplatte 16. Zwischen diesen vier Punkten bleiben Lüftungsschlitze frei; zur Kühlung kann durch diese und durch die Bohrung 14 im Gegendruckkolben 10 Luft strömen.

Unmittelbar unter der Gegendruckplatte 16 im ausgeschwenten Zustand befindet sich ein Magazin 21 für Rückenplatten, von dessen Abgabestelle eine Rückenplatte von der Gegendruckplatte 16 erfaßt werden kann.

Die Presse funktioniert folgenderweise:

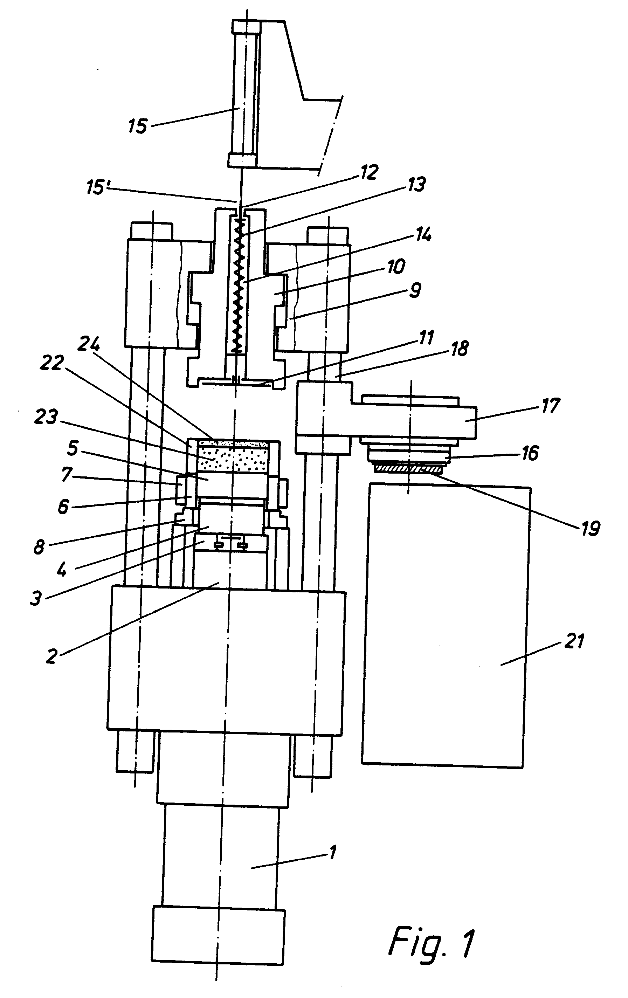

Die Gegendruckplatte 16 wird ausgeschwenkt (Fig. 1). In diesem Augenblick befindet sich an der Unterseite der Gegendruckplatte 16 - durch die Elektromagnete gehalten - ein fertiger Reibbelag 19 vom letzten Preßvorgang. Die Elektromagnete werden abgeschaltet, worauf der Reibbelag abgenommen werden kann; danach werden die Elektromagnete wieder eingeschaltet, und eine Rückenplatte vom Magazin 21 entnommen, die dann an der Unterseite der Gegendruckplatte "klebt" und dadurch vorgeheizt wird. Gleichzeitig kann die Preßform 6 und der Preßstempel 5 gereinigt und besprüht werden. (Das Besprühen soll verhindern, daß Reibbelag- oder Zwischenschichtpulver an der Preßform 6 oder dem Preßstempel 5 kleben bleibt.) Der gleichzeitige Vorgang bringt klarerweise einen Taktzeitgewinn. Nun wird der Preßstempel 5 in eine obere Stellung gebracht und eine Zwischenform 22, die mit verdichtetem Reibbelagpulver 23 und Zwischenschichtpulver 24 gefüllt ist, aufgesetzt. Falls die Zwischenform 22 einen verschließbaren Boden aufweist, wird dieser geöffnet. Daraufhin wird die Betätigungsvorrichtung 15 aktiviert und dadurch der Ausstoßstempel 11 auf das Reibbelagpulver 23 bzw. das Zwischenschichtpulver 24 gedrückt. Nun senkt man den Preßstempel 5 und den Ausstoßstempel 11 synchron ab, wodurch das Reibbelagpulver 23 und das Zwischenschichtpulver 24 in die Preßform 6 geschoben werden. Der Absenkvorgang wird abgebrochen, sobald das gesamte Material aus der Zwischenform 22 in der Preßform 6 ist; ein weiteres Absenken wäre nachteilig, weil dann beim Pressen das Material wieder angehoben werden müßte, wodurch Reibbelagpulver 23 zwischen den Preßstempel 5 und die Preßform 6 gelangen kann und auch die gleichmäßige Dicke des Zwischenschichtpulvers 24 zerstört werden kann.

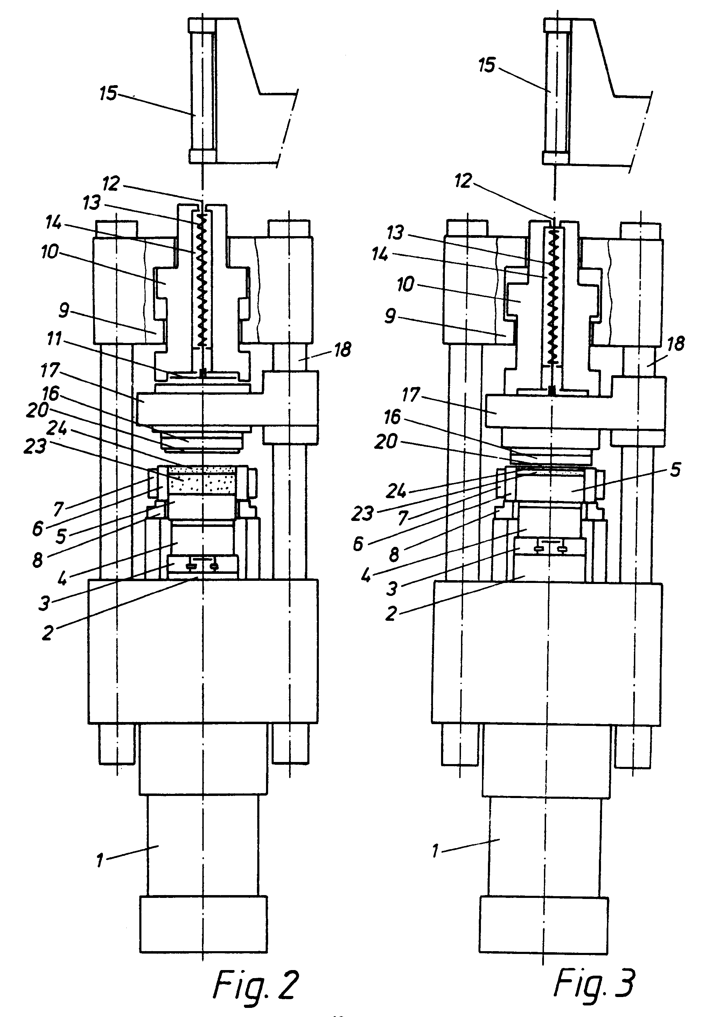

Anschließend wird die Betätigungsvorrichtung 15 des Ausstoßstempels 11 abgeschaltet, wodurch sich dieser durch die Kraft der Feder 13 wieder in seine obere Ruhestellung zurückbewegt, wo er im Gegendruckkolben 10 versenkt ist. Nachdem man die Zwischenform 22 entfernt hat, kann der Träger 17 samt Gegendruckplatte 16 eingeschwenkt werden (Fig. 2). Die Gegendruckplatte 16, an deren Unterseite die Rückenplatte 20 "klebt", befindet sich nun unmittelbar unter der Unterseite des Gegendruckkolbens 10 und kann durch diesen nach unten gedrückt werden, bis die Rückenplatte 20 auf der Preßform 6 aufliegt. In dieser Lage wird sie dann durch den Gegendruckkolben 10 mit einer Kraft angepreßt, die höher ist als die Preßkraft des Preßstempels 5, um ein Abheben der Rückenplatte 20 von der Preßform 6 mit Sicherheit zu verhindern. Die Preßform ist zu diesem Zeitpunkt mit verdichtetem Reibbelagpulver 23 und mit ebenfalls verdichtetem Zwischenschichtpulver 24 gefüllt.

Nun beginnt der eigentliche Preßvorgang, indem man den Preßzylinder 1 mit Druck beaufschlagt und dadurch den Preßstempel 5 nach oben drückt (Fig. 3). Während des Pressens wird zum Lüften der Preßstempel 5 mehrmals abgesenkt, sodaß Gase, die sich während des Pressens bilden, entweichen können. Das Pressen kann entweder mit konstanter Preßkraft erfolgen oder aber mit konstantem Preßvolumen. Das letztere ist bei manchen Reibbelägen mit langer Aushärtezeit notwendig, weil bei konstantem Druck der Reibbelag zu stark verdichtet würde. Der Preßstempel 5 muß also zum Befüllen, zum Lüften und zum Pressen mit konstantem Volumen bestimmte Positionen anfahren können.

Nach dem Ende des Preßvorgangs wird der Gegendruckkolben 10 in seine obere Stellung gefahren, wodurch die Gegendruckplatte 16 infolge der Federvorspannung ebenfalls in ihre obere Stellung gelangt. Anschließend wird der Preßstempel 5 in seine obere Stellung gefahren, wodurch der fertige Reibbelag aus der Preßform 6 gedrückt wird. Nun wird der Gegendruckkolben 10 und damit die Gegendruckplatte 16 soweit ab-

EP 0 310 594 B1

gesenkt, daß die wieder eingeschalteten Elektromagnete den fertigen Reibbelag erfassen. Nachdem der Gegendruckkolben 10 wieder in seine obere Stellung gebracht wurde, kann der Träger 17 mit der Gegendruckplatte 16 ausgeschwenkt werden, wodurch der Anfangszustand (Fig. 1) wieder erreicht ist.

Die erfindungsgemäße Presse und das erfindungsgemäße Beschickungsverfahren können sowohl bei Einzelpressen als auch bei Preßanlagen, z.B. bei Rundtischanlagen, eingesetzt werden.

## Patentansprüche

1. Verfahren zum Beschicken einer Presse zur Herstellung von Blöcken aus schüttbarer Masse (23, 24), bei dem die Masse (23, 24) in eine Zwischenform (22), deren Innenkontur an die Innenkontur der Preßform (6) angepaßt ist, gefüllt wird, die Masse (23, 24) in der Zwischenform (22) verdichtet wird, danach die Zwischenform (22) zur Presse transportiert und auf die Preßform (6) gesetzt wird, sodaß deren Innenkonturen übereinanderliegen, während der Preßstempel (5) der Presse in einer oberen Stellung ist, dadurch gekennzeichnet, daß zur Herstellung von Bremsbelägen als Masse (23, 24) Reibbelagpulver (23) und Zwischenschichtpulver (24) verwendet wird, wobei zuerst das Reibbelagpulver (23) in die Zwischenform (22) gefüllt und anschließend verdichtet wird und danach das Zwischenschichtpulver (24) gleichmäßig in die Zwischenform (22) gefüllt wird, wonach gegebenenfalls noch einmal verdichtet wird, und daß während des Absenkens des Preßstempels (5) ein Ausstoßstempel (11) von oben auf die Masse (23, 24) in der Zwischenform (22) drückt, wobei der Ausstoßstempel (11) synchron mit dem Preßstempel (5) abgesenkt wird, bis die gesamte in der Zwischenform (22) befindliche Masse (23, 24) in die Preßform (6) gelangt ist.

2. Verfahren nach Anspruch 1, dadurch gekennzeichnet, daß eine Zwischenform (22) mit verschließbarem Boden verwendet wird und daß der Boden vor dem Füllen geschlossen und nach dem Aufsetzen der Zwischenform (22) auf die Preßform (6) geöffnet wird.

3. Verfahren nach Anspruch 1 oder 2, dadurch gekennzeichnet, daß eine Zwischenform (22) bestehend aus zwei übereinanderliegenden Teilen mit gleicher Innenkontur verwendet wird, deren Gesamthöhe zur Aufnahme des Reibbelagpulvers (23) ausreicht, wobei die Höhe des unteren Teils zur Aufnahme des verdichteten Reibbelag- (23) und Zwischenschichtpulvers (24) ausreicht, und daß nach dem Verdichten nur der untere Teil der Zwischenform (22) zur Presse transportiert wird.

4. Presse zur Druchführung des Verfahrens nach Anspruch 1, die einen durch einen Preßzylinder (1) mit Preßkolben betätigbaren Preßstempel (5), eine Preßform (6) und eine ausfahrbare, durch einen Gegendruckzylinder (9) mit Gegendruckkolben (10) beaufschlagbare Gegendruckplatte (16) aufweist, dadurch gekennzeichnet, daß der Gegendruckzylinder (9) über der Preßform (6) liegt und da über dem Gegendruckzylinder (9) eine Betätigungsvorrichtung (15), z. B. ein Pneumatikzylinder, für einen Ausstoßstempel (11) liegt, der mit dem an der Unterseite des Gegendruckkolbens (10) versenkbar angeordneten Ausstoßstempel (11) verbunden ist.

5. Presse nach Anspruch 4, dadurch gekennzeichnet, daß der Gegendruckkolben (10) eine Bohrung (14) aufweist, durch die eine Verbindungsstange (12) zwischen dem Ausstoßstempel (11) und seiner Betätigungsvorrichtung (15) geführt ist, und daß in der Bohrung (14) eine Feder (13) untergebracht ist, durch die die Verbindungsstange (12) in eine Richtung vorgespannt ist.

6. Presse nach Anspruch 5, dadurch gekennzeichnet, daß die Gegendruckplatte (16) um eine Standsäule (1) ausschwenkbar ist.

7. Presse nach Anspruch 6, dadurch gekennzeichnet, daß die Gegendruckplatte (16) Elektromagnete zur Aufnahme einer Rückenplatte (20) aufweist.

8. Presse nach Anspruch 6 oder 7, dadurch gekennzeichnet, daß unter der Gegendruckplatte (16) im ausgeschwenkten Zustand ein Magazin (21) für Rückenplatten angeordnet ist.

9. Presse nach Anspruch 8, dadurch gekennzeichnet, daß das Magazin (21) mehrere Stapeln unterschiedlicher Rückenplatten enthält.

## Claims

1. Method for loading a press for producing blocks from bulk material (23, 24), in which the material (23, 24) is introduced into an intermediate mould (22) whose inner contour is matched to the inner contour of the compression mould (6), the material (23, 24) is compressed in the intermediate mould (22), the intermediate mould (22) is then conveyed to the press and placed onto the compression mould (6) so that their inner contours are arranged on top of each other, whilst the pressure ram (5) of the press is in an upper position, characterised in that friction lining powder (23) and intermediate layer powder (24) is used as the material (23, 24) for man-

6

EP 0 310 594 B1

ufacturing brake linings, wherein first the friction lining powder (23) is introduced into the intermediate mould (22) and then compressed and after that the intermediate layer powder (24) is evenly introduced into the intermediate mould (22), whereupon if necessary compression takes place once again, and that during the lowering of the pressure ram (5) an ejection ram (11) presses down from above on the material (23, 24) in the intermediate mould (22), wherein the ejection ram (11) is lowered in synchronism with the pressure ram (5) until all the material (23, 24) in the intermediate mould (22) has been transferred to the compression mould (6).

2. Method according to claim 1, characterised in that an intermediate mould (22) with a closeable bottom is used and that the bottom is closed before filling and opened after the intermediate mould (22) has been placed on the compression mould (6).

3. Method according to claim 1 or 2, characterised in that an intermediate mould (22) is used which consists of two parts which the same inner contours arranged on top of each other, whose total height is sufficient for receiving the friction lining powder (23), in which the height of the lower part is sufficient to receive the compresed friction lining (23) and intermediate layer powder (24), and that after compression only the lower part of the intermediate mould (22) is transported to the press.

4. Press of carrying out the method according to claim 1, having a pressure ram (5) operated by a pressure cylinder (1) with pressure piston, a compression mould (6) and an extendable counterpressure plate (16) acted on by a counterpressure cylinder (9) with counterpressure piston (10), characterised in that the counterpressure cylinder (9) is located above the compression mould (6) and that above the counterpressure cylinder (9) is located an operating device (15), for example a pneumatic cylinder, for an ejection ram (11) which is connected to the ejection ram (11) arranged for concealment on the underside of the counter piston (10).

5. Press according to claim 4, characterised in that the counterpressure piston (10) has a bore (14) through which is passed a connecting rod (12) between the ejection ram (11) and its operating device (15), and that the bore (14) houses a spring (13) through which the connecting rod (12) is biassed in one direction.

6. Press according to claim 5, characterised in that the counterpressure plate (16) is traverse about an upright pillar (1).

7. Press according to claim 6, characterised in that the counterpressure plate (16) has electromagnets for receiving a back plate (20).

8. Press according to claim 6 or 7, characterised in that beneath the counterpressure plate (16) in the traversed position is arranged a magazine (21) for back plates.

9. Press according to claim 8, characterised in that the magazine (12) contains a number of stacks of different back plates.


**Revendications**

1. Procédé de chargement d'une presse pour la production de blocs à partir de matière en vrac (23, 24), dans lequel la matière (23, 24) est chargée dans un moule intermédiaire (22) dont le contour intérieur est adapté à celui du moule de pressage (6) et comprimée dans le moule intermédiaire, celui-ci étant ensuite transporté sur la presse et posé sur le moule de pressage (6), de telle façon que leurs contours intérieurs se superposent quant la matrice de pressage (5) de la presse est dans sa position supérieure, caractérisé en ce qu'on utilise pour la fabrication de garnitures de frein comme matière (23, 24) de la poudre à garniture de friction (23) et de la poudre à couche intermédiaire (24), la poudre à garniture de friction venant d'abord remplir le moule intermédiaire (22) et étant ensuite comprimée et la poudre à couche intermédiaire (24) venant ensuite remplir le moule intermédiaire (22) de façon bien répartie, et, le cas échéant, étant de nouveau comprimée, et en ce qu'une matrice d'extraction (11) vient appuyer d'en haut sur la matière (23, 24) disposée dans le moule intermédiaire (22), pendant l'abaissement de la matrice de pressage (5), la matrice d'extraction (11) étant abaissée en synchronisme avec la matrice de pressage (5), jusqu'à ce que la totalité de la matière (23, 24) se trouvant dans le moule intermédiaire (22) soit passée dans le moule de pressage (6).

2. Procédé selon la revendication 1, caractérisé en ce que l'on utilise un moule intermédiaire (22) à fond susceptible d'être fermé et en ce que le fond est fermé avant le remplissage et est ouvert après la mise en place du moule intermédiaire (22) sur le moule de pressage (6).

3. Procédé selon la revendication 1 ou 2, caractérisé en ce que l'on utilise un moule intermédiaire (22) se composant de deux parties situées l'une au-dessus de l'autre et de même contour intérieur et dont la hauteur totale est suffisante pour recevoir la poudre à garniture de friction (23), la hauteur de la partie inférieure étant suffisante pour recevoir la poudre à garniture de friction (23) et la poudre à couche intermédiaire (24) comprimées, et en ce qu'après la compression, seule la partie inférieure du moule intermédiaire (22) est transportée sur la presse.

4. Presse pour mettre en oeuvre le procédé selon la revendication 1, comportant une matrice de pressage

7

(5), susceptible d'être actionnée par un vérin de pressage (1) muni d'un piston de pressage, un moule de pressage (6) et une plaque de contre-pression déployable télescopique et sollicitée par un vérin de contre-pression (9) muni d'un piston de contre-pression (10), caractérisée en ce que le vérin de contre-pression (9) est disposé au-dessus du moule de pressage (6) et en ce qu'au-dessus du vérin de contre-pression (9) est disposé un dispositif d'actionnement (15), par exemple un vérin pneumatique, pour une matrice d'extraction (11), reliée à celui-ci et disposé de façon escamotable sur la face inférieure du piston de contre-pression (10).

5. Presse selon la revendication 4, caractérisée en ce que le piston de contre-pression (10) est pourvu d'un alésage (14), dans lequel est guidée une tige de liaison (12) disposée entre la matrice d'extraction (11) et son dispositif d'actionnement (15) et en ce que dans l'alésage (14) est logé un ressort (13) exerçant selon une direction déterminée une précontrainte sur la tige de liaison (12).

6. Presse selon la revendication 5, caractérisée en ce que la plaque de contre-pression (16) est susceptible de pivoter autour d'une colonne verticale (1).

7. Presse selon la revendication 6, caractérisée en ce que la plaque de contre-pression (16) comporte des électroaimants destinés à recevoir une plaque d'appui (20).

8. Presse selon la revendication 6 ou 7, caractérisée en ce que sous la plaque de contre-pression (16) est disposé vers l'extérieur en position pivotée un magasin (21) pour des plaques d'appui.

9. Presse selon la revendication 8, caractérisée en ce que le magasin (21) contient plusieurs piles de plaques d'appui différentes.

*Fig. 1*

Fig. 2

Fig. 3